(19) Europäisches Patentamt
European Patent Office
Office européen des brevets

(11) EP 0 370 446 B1

(12) EUROPÄISCHE PATENTSCHRIFT

(45) Veröffentlichungstag und Bekanntmachung des Hinweises auf die Patenterteilung:
**15.05.1996 Patentblatt 1996/20**

(51) Int Cl.[6]: **C08G 59/56**, C08G 59/66, C08L 63/00

(21) Anmeldenummer: **89121472.8**

(22) Anmeldetag: **20.11.1989**

# (54) Polyoxyalkylendithiole und Polyamine enthaltende härtbare Epoxidharz-Stoffgemische

Curable epoxy resin compositions containing polyalkylene dithiols and polyamines

Compositions de résines époxy durcissables contenant des polyalkylène dithiols et des polyamines

(84) Benannte Vertragsstaaten:
**AT CH DE ES FR GB IT LI**

(30) Priorität: **23.11.1988 CH 4350/88**
**07.09.1989 CH 3247/89**

(43) Veröffentlichungstag der Anmeldung:
**30.05.1990 Patentblatt 1990/22**

(73) Patentinhaber: **CIBA-GEIGY AG**
**CH-4002 Basel (CH)**

(72) Erfinder:
- **Setiabudi, Frans, Dr.**
  **D-7812 Bad Krozingen (DE)**
- **Wolf, Jean-Pierre, Dr.**
  **CH-1723 Marly (CH)**

(74) Vertreter: **Zumstein, Fritz, Dr. et al**
**Patentanwälte,**
**Dr. F. Zumstein,**
**Dipl.-Ing. F. Klingseisen,**
**Bräuhausstrasse 4**
**D-80331 München (DE)**

(56) Entgegenhaltungen:
**GB-A- 1 077 997** **US-A- 4 092 293**

- **CHEMICAL ABSTRACTS, Band 88, Nr. 16, 17. April 1978, Seite 33, Zusammenfassung Nr. 106246s, Columbus, Ohio, US; & JP-A-77 112 637 (PENTEL CO. LTD) 21-09-1977**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 370 446 B1

Printed by Jouve, 75001 PARIS (FR)

## Beschreibung

Die Erfindung betrifft härtbare Stoffgemische aus Epoxidharzen, speziellen Polyoxyalkylendithiolen und Polyaminen mit mindestens zwei primären Aminogruppen, die daraus erhältlichen vernetzten Produkte sowie die Verwendung der Gemische insbesondere für die Herstellung von Dichtungsmassen und Injektionsmassen.

Epoxidharze zeichnen sich durch viele gute Eigenschaften aus. Allerdings weisen gehärtete Produkte für gewisse Anwendungen ungenügende Flexiblität und Zähigkeit auf. Eine Vielzahl von Zusätzen, welche flexibilisierend wirken, ist daher in der Literatur beschrieben, darunter auch Thiolgruppen enthaltende Verbindungen (vgl. z.B. Lee und Neville "Handbook of Epoxy Resins", Seite 16-21 bis 16-30, McGraw-Hill, New York 1967). Darunter fanden am meisten Beachtung die flüssigen Polysulfidpolymere der allgemeinen Formel

$$HS(CH_2CH_2OCH_2OCH_2CH_2SS)_nCH_2CH_2OCH_2OCH_2CH_2SH,$$

welche unter dem Handelsnamen Thiokole® bekannt sind und meistens in Kombination mit Aminhärtern verwendet werden. Mit solchen Polysulfiden modifizierte Epoxidharze und deren Eigenschaften werden von K.R. Cranker und A. J. Breslau in Industrial and Engineering Chemistry 48:1, 98 - 103 (1956) ausführlich beschrieben.

Die US 3,090,798 beschreibt Mercaptangruppen enthaltende Polyester erhalten durch Umsetzung von Mercaptoalkoholen, wie z.B. 2-Mercaptoethanol, mit Polycarbonsäuren mit mindestens 18 C-Atomen, insbesondere polymeren Fettsäuren, sowie die Verwendung dieser Produkte zusammen mit basischen Katalysatoren, vorzugsweise mit tertiären Aminen, als Härter für Epoxidharze. Die gehärteten Systeme weisen gute mechanische und elektrische Eigenschaften, u.a. auch eine erhöhte Flexibilität, auf.

Auch die US 3,352,810 beschreibt Epoxidharze mit verbesserter Flexibilität, welche neben dem Harz und den üblichen Härtern für Epoxidharze als Flexibilisator einen zwei oder mehrere SH-Gruppen enthaltenden Ester einer Mercaptocarbonsäure mit einem Polyol enthalten. Bevorzugte Mercaptocarbonsäuren sind Thioglykolsäure oder 3-Mercaptopropionsäure, und bevorzugte Polyole sind Polyethylenglykole, Polypropylenglykole und Polypropylentriole. Als Härter werden unter anderem primäre, sekundäre und tertiäre Amine eingesetzt.

Die US 3,472,913 beschreibt sowohl Hydroxyl- als auch Thiolgruppen enthaltende Polyether mit einem Molekulargewicht von mindestens 1000 und einem theoretischen Thiolgruppen zu Hydroxylgruppen Mengenverhältnis von grösser als eins. Die Anzahl der Thiolgruppen pro Molekül kann dabei beliebig variieren. Diese Thiolgruppen enthaltenden Polymere können mit einer Vielzahl von Reagenzien, darunter auch mit Epoxidharzen, vernetzt werden. Bei Gemischen mit Epoxidharzen wird vorzugsweise noch ein basischer Katalysator, beispielsweise ein Amin, verwendet. Die vernetzten Produkte zeichnen sich durch hohe Zähigkeit und Dehnbarkeit aus.

In der US 4,126,305 werden Stoffgemische enthaltend (i) ein Epoxidharz, (ii) als Härter für das Epoxidharz ein Amin mit mindestens drei H-Atomen, welche direkt an ein aliphatisches oder cycloaliphatisches Aminstickstoffatom gebunden sind, oder bestimmte tertiäre Amine, (iii) ein Polymercaptan und (iv) ein Polyen mit mindestens zwei aktivierten ethylenischen Doppelbindungen beschrieben. Die Stoffgemische eignen sich als Klebstoffe, welche durch die Umsetzung des Polymercaptans mit dem Polyen schnell eine gummiartige Klebeverbindung bilden und dann durch die Härtung des Epoxidharzes mit dem Amin vollständig vernetzen. Unter einer Vielzahl von Polymercaptanen, wie mercaptanhaltige Polyester, mercaptanendständige Sulfide, mercaptanendständige Polybutadiene oder Butadien-Acrylnitril-Copolymere und Poly(monomercaptancarboxylate), welche als Komponente (iii) verwendet werden können, werden auch mercaptanendständige Oxyalkylenverbindungen erwähnt.

Die US 3,914,288 beschreibt Addukte erhalten durch Umsetzung eines Epoxidharzes mit einem Polymercaptan mit mindestens zwei SH-Gruppen, welche durch eine Kette von mindestens 6 Kohlenstoff- oder Kohlenstoff- und Sauerstoffatomen voneinander getrennt sind, und einem Amin. Diese Addukte werden als Härter für die Herstellung von flexiblen Epoxidharzen eingesetzt. Für die Herstellung der Addukte bevorzugte Polymercaptane sind Ester von Mercaptocarbonsäuren und Polyolen, Oligomere und Polymere mit sich wiederholenden Disulfideinheiten, hydroxylgruppenhaltige Polymercaptane, erhalten durch Umsetzung eines Chlorhydrinethers eines mehrwertigen Alkohols mit einem Hydrosulfid in alkoholischem Medium, sowie thiolgruppenhaltige Polyester.

Die DD 256 715 beschreibt ein Verfahren zur Herstellung von hochmolekularen thermoplastischen Epoxid-Amin-Dithiol-Polyaddukten, die in verschiedenen Lösungsmitteln löslich sind und mittlere Molekülmassen $\overline{M}_n > 5000$ aufweisen. Als Dithiol werden auch Oxyalkylendithiole, wie z.B. Triglykoldithiol, eingesetzt.

Trotz der vielen im Stand der Technik vorgeschlagenen Lösungen vermag keine die Schwierigkeiten bei der Herstellung von flexiblen, zähelastischen Systemen auf Epoxidharzbasis voll zu bewältigen.

Gegenstand vorliegender Erfindung sind härtbare Stoffgemische enthaltend

(a) ein Epoxidharz,
(b) ein Dithiol der Formel I oder II

$$HS\!\left(\!-\underset{|}{\overset{R^1}{C}}HCH_2O\!\right)_{x}\!-CH_2\overset{R^1}{\underset{|}{C}}HSH \qquad (I)$$

$$HS\!\left(-CH_2CH_2CH_2CH_2O\right)_{y}\!-CH_2CH_2CH_2CH_2SH \qquad (II),$$

worin $R^1$ unabhängig voneinander Wasserstoff oder Methyl, x eine ganze Zahl von 2 bis 50 und y eine ganze Zahl von 1 bis 30 bedeuten, und

(c) ein Polyamin mit mindestens zwei primären Aminogruppen, wobei Polyene mit durchschnittlich mindestens zwei ethylenischen Doppelbindungen in β-Stellung zu einem Sauerstoff-, Stickstoff- oder Schwefelatom ausgeschlossen sind.

Ein weiterer Gegenstand der Erfindung sind die durch Härtung des Stoffgemisches erhältlichen vernetzten Produkte. Diese zeichnen sich durch erhöhte Flexibilität und zähelastische Eigenschaften kombiniert mit noch immer guten Festigkeits- und Härte-Werten aus.

Als Epoxidharz (a) kann im Prinzip jede in der Technik der Epoxidharze übliche Verbindung eingesetzt werden.

Beispiele für Epoxidharze sind:

I) Polyglycidyl- und Poly(β-methylglycidyl)ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinstäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkernigen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.

Zu den Poly(N-glycidyl)verbindungen zählen aber auch Triglycidylisocyanurat, N,N′-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan-1,2-dithiol oder Bis( 4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von mehrwertigen Phenolen, wie beispielsweise von 2,2-Bis(4-hydroxyphenyl)propan (Bisphenol A) oder Bis(4-hydroxyphenyl)methan (Bisphenol F).

Am meisten bevorzugt als Epoxidharze werden Diglycidylether von Bisphenol A.

Die als Komponente (b) der erfindungsgemässen Stoffgemische verwendeten Dithiole werden von Polyoxyalkylenglykolen abgeleitet. Sie können zum Beispiel durch Umsetzung des entsprechenden Polyoxyalkylenglykols mit Thionylchlorid zum entsprechenden Dichlorderivat, gefolgt von Reaktion des Dichlorderivats mit Thioharnstoff und Hydrolyse des Produkts zum gewünschten Dithiol erhalten werden. Das Reaktionsschema kann wie folgt dargestellt werden

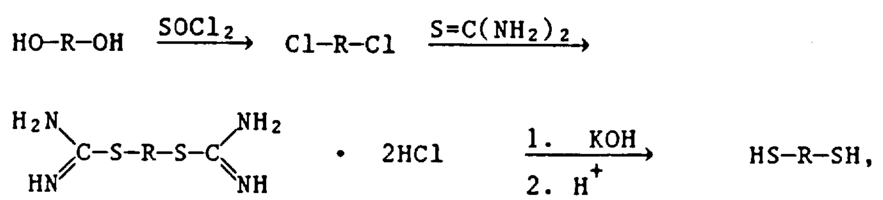


wobei R die Polyoxyalkylenkette darstellt. Die geschilderte Umsetzung von Alkoholen zu Thiolen wird beispielsweise in Organic Synthesis, Collective Volume 3, Seiten 698 - 700 und Collective Volume 4, Seiten 401 - 403, Wiley, Hew York 1955 bzw. 1963 beschrieben.

Die Ausgangsverbindungen für die Herstellung der Dithiole (b) sind im Handel in verschiedenen Molekulargewichtsbereichen erhältlich.

Bei den Dithiolen der Formel I kann es sich um Polyethylenglykol-Derivate, um Polypropylenglykol-Derivate oder auch um Copolymere mit Oxyethylen- und Oxypropyleneinheiten handeln. Die Copolymere können Blockpolymere oder statistische Polymere sein. Die entsprechenden Blockpolymere werden manchmal auch Polypropylenglykolethoxylat bzw. Polyethylenglykolpropoxylat genannt, je nachdem, ob sie endständige Polyethylenglykol- oder Polypropylenglykolblöcke aufweisen. Die im Handel erhältlichen Polypropylenglykole weisen vorwiegend sekundäre endständige Hydroxylgruppen auf, wie dies für die entsprechenden Dithiole der Formel I dargestellt ist. Es versteht sich von selber, dass auch Polypropylen-Dithiole mit primären Thiolgruppen als Komponente (b) der erfindungsgemässen Stoffgemische verwendet werden können. Die erfindungsgemäss verwendbaren Dithiole der Formel II werden von Polytetrahydrofurandiolen abgeleitet. Polytetrahydrofurandiole sind bekannt und auch im Handel erhältlich. Beispiele solcher Produkte sind Poly-THF 650®, Poly-THF 1000® oder Poly-THF 2000® der BASF, welche nach der Umsetzung zu den entsprechenden Dithiolen Verbindungen der Formel II mit y gleich 7-8, 12-13 bzw. 26-27 entsprechen. Diese Verbindungen werden unter den Dithiolen der Formel II bevorzugt.

In den erfindungsgemässen Stoffgemischen werden Dithiole der Formel I oder II mit einem Molekulargewicht $\overline{M}_n$ kleiner als 2000, insbesondere kleiner als 1000 bevorzugt.

Besonders bevorzugt werden Dithiole der Formel I, worin x eine ganze Zahl von 2 bis 20, insbesondere von 2 bis 12 ist, sowie Dithiole der Formel II, worin y eine ganze Zahl von 1 bis 12, insbesondere von 2 bis 8 bedeutet.

Am meisten bevorzugt wird das Dithiol der Formel I, worin $R^1$ Wasserstoff und x=7-8 und insbesondere 2 bedeuten. Das letztgenannte Dithiol ist auch als Triglykoldimercaptan oder 1,2-Bis(2′-Mercaptoethoxy)ethan bekannt.

Als Polyamin-Komponente (c) der erfindungsgemässen Stoffgemische kann jedes beliebige Amin mit mindestens zwei primären Aminogruppen, d.h. mindestens 2 $NH_2$-Gruppen, verwendet werden. Das Amin kann zwei oder auch mehrere $NH_2$-Gruppen aufweisen und kann auch noch sekundäre und/oder tertiäre Amin-Stickstoffatome enthalten.

Beispiele für Polyamine (c) sind aliphatische, cycloaliphatische, aromatische und heterocyclische Amine, wie Bis (4-aminophenyl)methan, Anilin-Formaldehyd-Harze, Bis(4-aminophenyl)sulfon, Propan-1,3-diamin, 2,2-Dimethyl-1,3-propandiamin (Neopentandiamin), Hexamethylendiamin, Diethylentriamin, Bis(3-aminopropyl)amin, N,N-Bis(3-aminopropyl)methylamin, Triethylentetramin, Pentaethylenhexamin, 2,2,4-Trimethylhexan-1,6-diamin, m-Xylylendiamin, 1,2- und 1,4-Diaminocyclohexan, Bis(4-aminocyclohexyl)methan, Bis(4-amino-3-methylcyclohexyl)methan, 2,2-Bis(4-aminocyclohexyl)propan und 3-Aminomethyl-3,5,5-trimethylcyclohexylamin (Isophorondiamin), Polyaminoimidazoline sowie Polyaminoamide, wie beispielsweise solche aus aliphatischen Polyaminen und dimerisierten oder trimerisierten Fettsäuren. Geeignete Polyamine (c) sind auch die als Jeffamine® bekannten Polyoxyalkylenamine der Firma Texaco, wie z.B. Jeffamine® EDR 148, D 230, D 400 oder T 403.

Bei Verwendung von cycloaliphatischen oder aliphatischen Polyaminen werden vorzugsweise keine Glycidylester als Harzkomponente eingesetzt.

Bevorzugt als Komponente (c) der erfindungsgemässen Stoffgemische sind aliphatische oder cycloaliphatische Polyamine. Unter den cycloaliphatischen Polyaminen besonders bevorzugt sind 3-Aminomethyl-3,5,5-trimethylcyclohexylamin (Isophorondiamin), Bis(4-aminocyclohexyl)methan und Polyaminoimidazoline, wie bispielsweise das als Eurodur® 370 vertriebene Polyaminoimidazolin der Firma Schering AG. Unter den aliphatischen Polyaminen (c) werden Verbindungen der Formeln IV bis IX bevorzugt

$H_2N{-}R^2{-}NH_2$ (IV)

$H_2N{\leftarrow}CH_2CH_2O)_aCH_2CH_2NH_2$ (V)

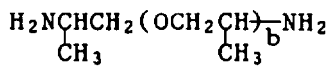

(VI)

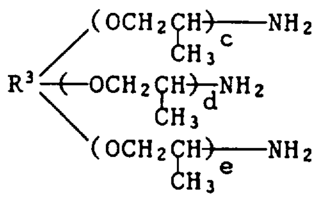

(VII)

$H_2N(CH_2CH_2CH_2NH)_fCH_2CH_2CH_2NH_2$ (VIII)

$H_2N(CH_2CH_2NH)_gCH_2CH_2NH_2$ (IX) ,

worin $R^2$ ein geradkettiger oder verzweigter $C_2$-$C_{10}$-Alkylenrest ist, a eine ganze Zahl von 1 - 10, vorzugsweise 2, b eine ganze Zahl von 1 - 10, vorzugsweise 2 - 6, c, d, und e unabhängig voneinander eine ganze Zahl von 1 - 20, vorzugsweise 2 - 5, f eine ganze Zahl von 1 - 5, vorzugsweise 1 und g eine ganze Zahl von 1 - 10, vorzugsweise 1 - 5, sind und $R^3$ für einen dreiwertigen Rest der Formeln

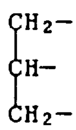 oder insbesondere 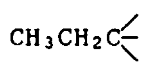

steht.

Ganz besonders bevorzugt werden 2,2,4-Trimethylhexan-1,6-diamin, Jeffamine® EDR 148 der Formel V mit a = 2, Jeffamine® D 230 bzw. D 400 der Formel VI mit b = 2 - 3 bzw. b = 5 - 6, Jeffamine® T 403 der Formel VII, Bis(3-aminopropyl)amin, Diethylentriamin, Triethylentetramin und Pentaethylenhexamin.

Neben den Polyaminen (c) mit mindestens 2 $NH_2$-Gruppen können die erfindungsgemässen Gemische auch kleinere Mengen, beispielsweise weniger als 50 Gew. % des Polyamins (c), anderer Amine enthalten. Ein Beispiel eines solchen Amins ist 3-(N,N-Dimethylaminopropyl)-3′-aminopropylamin.

Die erfindungsgemässen Stoffgemische können, falls erwünscht, auch Härtungsbeschleuniger enthalten, obwohl Gemische ohne Härtungsbeschleuniger bevorzugt werden. Beispiele für Härtungsbeschleuniger sind tertiäre Amine, deren Salze oder quaternäre Ammoniumverbindungen, wie Benzyldimethylamin, 2,4,6-Tris(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholate von 2,4-Dihydroxy-3-hydroxymethylpentan; oder substituierte Harnstoffe, wie N-(4-Chlorphenyl)-N′,N′-dimethylharnstoff oder N-(3-Chlor-4-methylphenyl)-N′,N′-dimethylharnstoff (Chlortoluron).

Zusätzlich zu den Dithiolen (b) der Formel I oder II können die erfindungsgemässen Stoffgemische noch kleinere Mengen, beispielsweise weniger als 50 Gew.% des Dithiols (b) anderer Di- oder Polythiole enthalten. Bevorzugt werden aber Gemische, welche als Thiolkomponente nur die Verbindungen der Formel I oder II enthalten.

Die Härtung der erfindungsgemässen Stoffgemische erfolgt im allgemeinen bereits bei tiefen Temperaturen von etwa 0°C bis Raumtemperatur. Falls erwünscht, kann auch bei höherer Temperatur beispielsweise bis zu etwa 200°C, insbesondere bei etwa 40 bis 100°C gehärtet oder gegebenenfalls nachgehärtet werden. Einer der Vorzüge der vorliegenden Stoffgemische ist, dass man je nach Wahl der Komponenten (b) und (c) und gegebenenfalls eines Härtungsbeschleunigers sowie je nach der relativen Menge der Komponenten (b) und (c) praktisch nach Belieben die Gebrauchsdauer der härtbaren Gemische einstellen kann. Dasselbe trifft auch für die Eigenschaften der gehärteten Produkte zu. Je nach Art und der relativen Menge des Dithiols (b) und des Polyamins (c) können Epoxidharzsysteme mit einer sehr breiten Spanne an Flexibilität und Zähigkeit hergestellt werden. Die Gesamtmenge des Härters (b) plus (c) wird vorzugsweise so berechnet, dass sie der stöchiometrisch benötigten Menge entspricht.

Je nach Art des eingesetzten Epoxidharzes (a) bzw. dessen Epoxidäquivalents, sowie des verwendeten Dithiols (b) und Polyamins (c) können die relativen Mengen der Komponenten sehr stark variieren. Die eingesetzten Mengen der Komponenten (b) und (c) werden auch vom Anwendungszweck, d.h. von der erwünschten Flexibilität des gehärteten Produktes sowie von der gewünschten Gebrauchsdauer des Stoffgemisches abhängen. Im allgemeinen steigt sowohl die Flexibilität als auch die Gebrauchsdauer mit der Erhöhung der relativen Menge des Dithiols im Dithiol/Polyamin-Gemisch.

Als besonders geeignet haben sich 5 - 30, vorzugsweise 10 - 25 Gew. % des Dithiols (b) und 3 - 35, vorzugsweise 5 - 20 Gew.% des Polyamins (c), bezogen auf die Gesamtmenge der Komponenten (a), (b) und (c), erwiesen.

Besonders gute Eigenschaften der gehärteten Produkte werden auch erzielt, wenn der Anteil der an die Thiolgruppen des Dithiols (b) gebundenen Wasserstoffatome 15 - 85, vorzugsweise 20 - 80, besonders bevorzugt 25 - 75 %, bezogen auf die Gesamtzahl der an die Thiolgruppen des Dithiols (b) und der an die Aminogruppen des Polyamines (c) gebundenen aktiven Wasserstoffatome beträgt.

Falls gewünscht, kann man den erfindungsgemässen Gemischen zur weiteren Erhöhung der Flexibilität noch Weichmacher zugeben. Gegenstand der Erfindung sind somit auch Gemische, welche zusätzlich zu den Komponenten (a), (b) und (c) noch (d) einen Weichmacher enthalten. Dabei können alle in der Technik als Weichmacher bekannte Verbindungen eingesetzt werden. Beispiele geeigneter Weichmacher sind Phthalsäureester, wie Dibutylphthalat, Phosphorsäureester, Adipin- und Sebacinsäureester, Glykole, Glykolsäureester oder Polyole.

Besonders geeignet als Weichmacher haben sich Benzylalkohol und insbesondere 3-Phenylpropanol erwiesen.

Die Menge des Weichmachers (d) beträgt vorzugsweise 4 - 25, insbesondere 6 - 20 Gewichtsteile, bezogen auf 100 Gewichtsteile des Epoxidharzes (a).

Gewünschtenfalls kann man den härtbaren Gemischen zur Herabsetzung der Viskosität reaktive Verdünner, wie z.B. Butandioldiglycidylether, Monoglycidylether isomerer höherer Alkohole, wie z.B. Grilonit RV 1814® der Fa. Ems-Chemie oder Butylglycidylether, 2,2,4-Trimethylpentylglycidylether, Phenylglycidylether, Kresylglycidylether oder Glycidylester zusetzen.

Die erfindungsgemässen Stoffgemische können auch Haftvermittler enthalten. Im Prinzip kann jeder bekannte Haftvermittler verwendet werden. Als besonders geeignete Haftvermittler haben sich Silane, wie z.B. γ-Glycidyloxypropyltrimethoxysilan (Silan A-187 der Fa. Union Carbide) oder γ-Mercaptopropyltrimethoxysilan (Silan A-189 der Fa. Union Carbide) oder Titanverbindungen, wie Tetraisopropyl-bis(dioctylphosphonato)-titanat (KR 41B der Fa. Kenrich Petrochemicals, Inc. USA), erwiesen.

Als weitere übliche Zusätze können die erfindungsgemässen Gemische ferner Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Antioxidantien und Lichtschutzmittel enthalten.

Die Herstellung der erfindungsgemässen Stoffgemische kann in üblicher Weise durch Vermischen der Komponenten mit Hilfe bekannter Mischaggregate (Rührer, Walzen) erfolgen.

Die gehärteten Produkte zeichnen sich durch die eingangs geschilderten vorteilhaften Eigenschaften aus. Ausgehärtete Epoxidharze mit der Flexibilität und den zähelastischen Eigenschaften der erfindungsgemässen Produkte waren bisher nicht bekannt. Zudem weisen die erfindungsgemässen vernetzten Produkte trotz ihrer hohen Flexibilität und Zähelastizität auch hervorragende mechanische und thermische Eigenschaften auf, welche auch nach längerer Lagerung, auch bei erhöhter Temperatur erhalten bleiben. Die vernetzten Produkte zeichnen sich auch durch gute Chemikalienbeständigkeit aus.

Die erfindungsgemässen Gemische lassen sich beispielsweise als Klebstoffe, Matrixharze, Lacke, Dichtungsmassen oder Injektionmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Dichtungsmassen, Anstrichmittel, Beschichtungsmassen, Lacke, Tauchharze, Giessharze, Imprägnierharze, Laminierharze, Matrixharze und Klebemittel verwendet werden.

Die Erfindung betrifft daher auch die Verwendung der erfindungsgemässen Gemische für die Herstellung von Dichtungsmassen, Injektionsmassen, Klebstoffen, Werkzeugharzen, Matrixharzen, Giessharzen oder Beschichtungsmassen.

Die folgenden Beispiele erläutern die Erfindung.

Beispiele

Herstellungsbeispiel H1:

a) Herstellung der Polytetrahydrofurandithiole A-C

$$HS-(CH_2CH_2CH_2CH_2O)_y-CH_2CH_2CH_2CH_2-SH$$

A: y = 7-8; B: y = 12-13; C: y = 26-27

Zu 1 mol des entsprechenden Poly-THF (Handelsprodukt der BASF AG) und 1 ml Pyridin werden bei 40-50°C unter $N_2$ 500 ml Thionylchlorid zugetropft. Die klare, gelbliche Lösung wird 6 Stunden bei 80°C am Rückfluss gekocht. Ueberschüssiges Thionylchlorid wird im Vakuum abdestilliert und das gelbe viskose Poly-THF-Dichlorid am Hochvakuum bei 80°C getrocknet. Das auf diese Weise erhaltene Poly-THF-Dichlorid wird zu einer siedenden Lösung von 2,2 mol Thioharnstoff in 650 ml 95 % Ethylalkohol getropft und über Nacht bei 76°C am Rückfluss gekocht. Anschliessend wird der Ethylalkohol abdestilliert und der viskose Rückstand mit 0,5 g Benzyltrimethylammoniumchlorid und 600 ml 6H NaOH-Lösung versetzt. Es wird 2 Stunden bei 95°C gekocht, dann auf 60° abgekühlt und portionenweise mit 32 % HCl auf pH = 2 angesäuert. Nach Abkühlen auf Raumtemperatur wird mit 750 ml Ethylacetat versetzt, die Phasen werden getrennt, die organische Phase wird mit $H_2O$ gewaschen, über $Na_2SO_4$ getrocknet und im Vakuum eingeengt.

| Physikalische Daten | | | |
|---|---|---|---|
| Dithiol | A | B | C |
| Ausbeute | 91 % | 90 % | 90 % |
| $\overline{M}_n$(GPC in THF) | 1137 | 1719 | 3090 |
| $\overline{M}_w/\overline{M}_n$ | 1,68 | 1,87 | 2,78 |
| Gehalt S[1)] (Gew.%) | 7,7 | 5,7 | 2,68 |
| Gehalt SH[2)] (mAeq.g) | 2,07 | 1,56 | 0,68 |
| Viskosität[3)] bei 40°C (mPa·s) | 175 | 366 | 2420 |
| Schmelzbereich | bei Raumtemperatur flüssig | 23-27°C | 30-35°C |

1) Elementaranalyse

2) Titration mit 0,1 N $AgNO_3$

3) I.C.I. Cone and Plate Viscometer

b) Herstellung des Polyethylenglykoldithiols D

$$HS-(CH_2CH_2O)_{7-8}-CH_2CH_2SH$$

Dieses Dithiol wird wie unter (a) oben beschrieben hergestellt.

Die Zusammensetzung der in den Beispielen verwendeten Stoffgemische sowie die Eigenschaften der gehärteten Produkte sind aus den Tabellen 1 bis 5 ersichtlich.

Falls nicht anders angegeben, erfolgte die Härtung jeweils während einer Woche bei Raumtemperatur.

Die Reissdehnung, Reissfestigkeit und Zugfestigkeit wurden alle mittels DIN 53455 bestimmt.

Die Rollenschälfestigkeit wurde mittels ISO 4578-79 bestimmt.

Die Zugscherfestigkeit wurde mittels DIN 53283 bestimmt.

Die Weiterreissfestigkeit wurde mittels DIN 53356 bestimmt.

Die Bestimmung der Glasübergangstemperatur (Tg) erfolgte mittels Mettler thermoanalytisches System TA 3000.

Die Bestimmung der Shore D Härte erfolgte mittels FRANK Härteprüfgerät 38024.

Die Gelierzeit wurde mit einem "Beck-Koller Drying Recorder" der Hickle Laboratory Engineering Co, Gomshall, Surrey, GB bestimmt. Dabei wird eine frisch hergestellte Harz/Härter Mischung auf eine Glasplatte (30 x 2,5 cm) mit einer Schichtdicke von etwa 200 µm aufgetragen. Ein 1 mm-Dicke Nadel wird senkrecht auf der Glasplatte innerhalb von 24 h von einem zum anderen Ende der Glasplatte (30 cm) bewegt. Sobald die Mischung anfängt zu gelieren hinterlässt die Nadel deutliche Spuren auf der Glasplatte. Die den ersten sichtbaren Spuren entsprechende Zeit bezeichnet man als Gelierzeit.

Die folgenden Epoxidharze und Dithiole wurden verwendet:

Epoxidharz 1:

Bisphenol-A-diglycidylether mit einem Epoxidäquivalentgewicht von 190,5 g/Val.

Epoxidharz 2:

Bisphenol-A-diglycidylether mit einem Epoxidäquivalentgewicht von 191,5 g/Val.

Epoxidharz 3:

Ein Gemisch aus 73,6 Gew.% Bisphenol-A-diglycidylether und 26,4 Gew.% Kresylglycidylether mit einem Epoxidäquivalentgewicht von 187 g/Val.

Epoxidharz 4:

Monoglycidylether eines höheren isomeren Alkohols mit einem Epoxidäquivalentgewicht von 286-312 g/Val und einer Viskosität bei 25°C von 10 mPa·s (Grilonit RV 1814® der Ems-Chemie).

Dithiol 1:

Triglykoldimercaptan der Formel $HS(CH_2CH_2O)_2CH_2CH_2SH$.

Dithiol 2:

Polyethylenglykoldithiol D der Formel

$$HS(CH_2CH_2O)_{7-8}CH_2CH_2SH$$

(hergestellt gemäss Beispiel H1).

Dithiol 3:

Polytetrahydrofurandithiol A der Formel

$$HS(CH_2CH_2CH_2CH_2O)_{7-8}CH_2CH_2CH_2CH_2SH$$

(hergestellt gemäss Beispiel H1).

Dithiol 4:

Polytetrahydrofurandithiol B der Formel

$$HS(CH_2CH_2CH_2CH_2O)_{12-13}CH_2CH_2CH_2CH_2SH$$

(hergestellt gemäss Beispiel H1).

Die in den Gemischen jeweils verwendeten Polyamine sowie die gegebenenfalls mitverwendeten Weichmacher und Haftvermittler sind aus den folgenden Tabellen ersichtlich.

Tabelle 1:

| Beispiel | 1 | 2 | 3 |
|---|---|---|---|
| Epoxidharz 1 (g)<br>Dithiol 1 (g)<br>Amin 1* (g) | 100<br>35<br>5,1 | 100<br>27,1<br>8,2 | 100<br>19,6<br>11,1 |
| Reissdehnung (%)<br>Reissfestigkeit ($N/mm^2$)<br>Zugfestigkeit ($N/mm^2$)<br>Tg (°C)<br>Shore D Härte<br>Gelierzeit bei RT (h) | 202<br>17,7<br>17,8<br>28<br>60<br>6 | 57,2<br>13,6<br>42,4<br>36<br>77<br>3 1/2 | 11,4<br>10,7<br>59,4<br>48<br>80<br>4 |

* 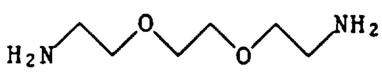 , Jeffamine® EDR-148 der Texaco

Mit dem Gemisch gemäss Beispiel 1werden folgende Prüfungen durchgeführt:

a) Rollenschälfestigkeit 6,9-7,9 N/mm (80 % Kohäsionsbruch)
b) Zugscherfestigkeit (Verklebung auf Al-Anticorodal 100B)

- Nach 20 h bei 50°C: 20,9 $N/mm^2$
- Nach 8 Wochen bei 50°C: 26,7 $N/mm^2$
- Nach 6 Wochen bei 80°C: 23,8 $N/mm^2$
- Nach 30 min bei 180°C gefolgt von 9 h in Wasser bei 100°C und 15 Tagen bei Raumtemperatur in der Luft: 12,4 $N/mm^2$

c) Zugscherfestigkeit (Verklebung auf öligem Stahlblech)

- Nach 30 min bei 180°C und 18 Tagen bei Raumtemperatur: 10,0 $N/mm^2$

d) Zuscherfestigkeit nach 2 Wochen bei Raumtemperatur

Verklebung auf SMC[1]: 6,2 $N/mm^2$
Verklebung auf ABS[2]: 6,9 $N/mm^2$

[1]: Glasfaserlaminat hergestellt mit einer Formmasse aus ungesättigtem Polyester (Sheet Molding Compound).
[2]: Pfropfpolymer von Acrylnitril und Styrol auf Butadienpolymer

e)

| Temperaturbeständigkeit | Nach 1 Monat bei Raumtemp. | Nach 30 min bei 180°C und 9 Tagen bei Raumtemperatur |
|---|---|---|
| Reissdehnung (%)<br>Reissfestigkeit ($N/mm^2$)<br>Zugfestigkeit ($N/mm^2$)<br>Weiterreissfestigkeit (N/mm) | 193<br>17,2<br>17,2<br>42,3 | 194<br>14,1<br>14,1<br>- |

Tabelle 2:

| Beispiel | 4 | 5 | 6 |
|---|---|---|---|
| Epoxidharz 1 (g) | 100 | 100 | 100 |
| Dithiol 1 (g) | 30,5 | 15,6 | 7,9 |
| Amin 2* (g) | 21,9 | 40,6 | 50,4 |
| Reissdehnung (%) | 188,5 | 72,4 | 9,3 |
| Reissfestigkeit ($N/mm^2$) | 18,4 | 17,2 | 14,9 |
| Zugfestigkeit ($N/mm^2$) | 15,5 | 31,7 | 48,9 |
| Tg (°C) | 24 | 36 | 43 |
| Shore D Härte | 50 | 72 | 75 |
| Gelierzeit bei RT (h) | > 24 | > 24 | > 24 |

* 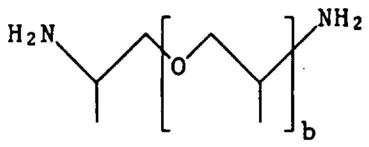

b = 5 - 6

Jeffamine® D 400 der Texaco

Tabelle 3:

| Beispiel | 7 | 8 | 9 | 10 | 11 | 12 | 13 | 14 |
|---|---|---|---|---|---|---|---|---|
| Epoxidharz 1 (g) | 100 | 100 | 100 | 100 | - | - | - | - |
| Epoxidharz 2 (g) | - | - | - | - | 100 | - | - | - |
| Epoxidharz 3 (g) | - | - | - | - | - | 50,8 | 52,4 | 55,6 |
| Dithiol 1 (g) | 35,2 | 27,2 | 19,8 | 12,8 | 14,2 | 7,5 | 2,5 | 1,25 |
| Amin 3* (g) | 5,5 | 8,9 | 12,1 | 15,2 | 14,5 | 7,5 | 10,0 | 11,25 |
| Benzylalkohol (g) | - | - | - | - | - | 6,6 | 7,7 | 6,8 |
| 3-Phenylpropanol (g) | - | - | - | - | 13,1 | - | - | - |
| Reissdehnung (%) | 188,5 | 20,5 | 9,6 | 9,7 | 53,5 | 160 | 124 | 33,8 |
| Reissfestigkeit ($N/mm^2$) | 15,2 | 19,9 | 16,7 | 30,3 | 21,6 | 6,8 | 19,0 | 21,9 |
| Zugfestigkeit ($N/mm^2$) | 17,9 | 49,9 | 61,2 | 67,6 | 24,6 | 6,8 | 25,8 | 37,7 |
| Tg (°C) | 28 | 39 | n.b. | n.b. | 36 | 15 | 35 | 34 |
| Shore D Härte | 60 | 78 | 81 | 81 | 75 | 27 | 75 | 80 |
| Gelierzeit bei RT (h) | 5 1/2 | 2 1/4 | 1 1/2 | 1 1/2 | n.b. | n.b. | n.b. | n.b. |

*2,2,4-Trimethylhexan-1,6-diamin

n.b.: nicht bestimmt

Mit dem Gemisch gemäss Beispiel 7 werden folgende Prüfungen durchgeführt:

a) Rollenschälfestigkeit 7,7-8,3 N/mm (100 % Kohäsionsbruch)
b) Zugscherfestigkeit (Verklebung auf Al-Anticorodal 100B)

- Nach 20 h bei 50°C: 22,2 $N/mm^2$
- Nach 8 Wochen bei 50°C: 18,4 $N/mm^2$
- Nach 30 min bei 180°C: 22,2 $N/mm^2$

c) Zugscherfestigkeit (Verklebung auf öligem Stahlblech)

- Nach 30 min bei 180°C und 18 Tagen bei Raumtemperatur: 7,1 $N/mm^2$

d) Zugscherfestigkeit nach 2 Wochen bei Raumtemperatur

Verklebung auf SMC[1]: 8,6 $N/mm^2$
Verklebung auf ABS[2]: 7,4 $N/mm^2$
Verklebung auf Glas: 7,4 $N/mm^2$
Verklebung auf Polyamid: 3,4 $N/mm^2$

[1]: Glasfaserlaminat hergestellt mit einer Formmasse aus ungesätigtem Polyester (Sheet Molding Compound).
[2]: Pfropfpolymer von Acrylnitril und Styrol auf Butadienpolymer

Im folgenden wird das Gemisch nach Beispiel 7 geprüft, nachdem die Härterkomponente bestehend aus dem Dithiol 1 und dem Amin 3 unter den unten angegebenen Bedingungen gelagert wurde. Die Vergleichswerte mit frisch zubereiteter Härterkomponente sind aus Tabelle 3 oben ersichtlich.

| Eigenschaft des vernetzten Systems | Lagerung der Härterkomponente bei Tageslicht während | | |
|---|---|---|---|
| | 3 Monaten bei RT | 6 Monaten bei RT | 1 Woche bei 50°C |
| Reissdehnung (%) | 194 | 153 | 129 |
| Reissfestigkeit ($N/mm^2$) | 18,3 | 21,5 | 20,9 |
| Zugfestigkeit ($N/mm^2$) | 18,3 | 22,8 | 20,9 |

Die gemessenen Werte zeigen, dass die Eigenschaften des vernetzten Systems auch nach längerer Lagerung der Härterkomponente nicht beeinträchtigt werden.

Tabelle 4:

| Beispiel | 15 | 16 | 17 | 18 |
|---|---|---|---|---|
| Epoxidharz 1 (g) | 100 | 100 | 100 | 100 |
| Dithiol 1 (g) | 35,2 | 27,4 | 28,4 | 21,3 |
| Amin 4* (g) | 5,8 | 9,5 | 9,1 | 12,4 |
| 3-Phenylpropanol (g) | - | - | 4,5 | 8,3 |
| Reissdehnung (%) | 200,2 | 13,3 | 106 | 56,4 |
| Reissfestigkeit ($N/mm^2$) | 19,0 | 18,1 | 20,1 | 18,7 |
| Zugfestigkeit ($N/mm^2$) | 19,0 | 50,8 | 22,0 | 34,6 |
| Tg (°C) | 31 | 40 | 37 | 40 |
| Shore D Härte | 70 | 80 | 77 | 83 |
| Gelierzeit bei RT (h) | 5 | 3 1/2 | 3 | 3 |

*Isophorondiamin

Mit dem Gemisch gemäss Beispiel 15werden folgende Prüfungen durchgeführt:

a) Rollenschälfestigkeit 4,4-6 N/mm (70 % Kohäsionsbruch)
b) Zugscherfestigkeit (Verklebung auf Al-Anticorodal 100B)

- Nach 20 h bei 50°C: 20,7 N/mm²
- Nach 30 min bei 180°C und 18 Tagen bei Raumtemperatur: 14,4 N/mm²

c) Zugscherfestigkeit (Verklebung auf öligem Stahl)

- Nach 30 min bei 180°C und 18 Tagen bei Raumtemperatur: 9,7 N/mm²

Tabelle 5:

| Beispiel | 19 | 20 | 21 | 22 | 23 | 24 | 25 | 26 |
|---|---|---|---|---|---|---|---|---|
| Epoxidharz 2 (g) | 100 | 100 | 100 | 100 | 100 | 100 | 100 | 100 |
| Dithiol 1 (g) | 14,6 | 25,5 | 13,7 | 18,3 | 16,8 | 14,5 | 15 | 15,8 |
| Aminart * (g) | Nr. 5 | Nr. 6 | Nr. 7 | Nr. 8 | Nr. 9 | Nr. 10 | Nr. 11 | Nr. 12 |
| Aminmenge (g) | 17,2 | 23,2 | 7,7 | 8,7 | 7,5 | 14,0 | 21,5 | 28,3 |
| Benzylalkohol (g) | 6,6 | - | - | - | - | - | - | - |
| 3-Phenylpropanol (g) | - | - | 15,2 | - | - | 15,9 | 13,2 | 13,4 |
| Silan A-189 (g) | 6,7 | 6,9 | - | 5,9 | 6,2 | - | - | - |
| KR 41B (g) | 3,3 | 3,5 | - | 3,0 | 3,1 | - | - | - |
| Reissdehnung (%) | 26,4 | 68,5 | 37,8 | 9,8 | 12,7 | 22,4 | 96,4 | 77,3 |
| Reissfestigkeit (N/mm²) | 24,2 | 21,1 | 24,9 | 33,3 | 27,2 | 21,3 | 16,1 | 18,9 |
| Zugsfestigkeit (N/mm²) | 32.4 | 21.1 | 32,7 | 47,9 | 48,9 | 41,6 | 16,2 | 19,0 |
| Tg (°C) | 46 | 24 | 40 | 47 | 50 | 47 | 28 | 27 |
| Shore D Härte | 79 | 62 | 77 | 82 | 82 | 80 | 48 | 64 |

*Amin Nr. 5: Bis(4-aminocyclohexyl)methan
" 6: Polyaminoimidazolin (57,3 g/NH; Eurodur® 370 der Schering AG)
" 7: Diethylentriamin
" 8: Bis(3-aminopropyl)amin
" 9: Triethylentetramin
" 10: Pentaethylenhexamin
" 11: 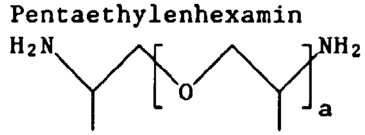 Jeffamine® D 230 der Texaco

a = 2 - 3

" 12: 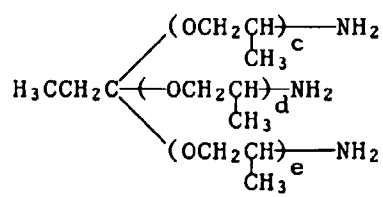 Jeffamine® T 403 der Texaco

c - e ≈ 2

Beispiel 27: Verwendung der härtbaren Gemische als flexibles Injektionssystem und als Dichtungsmasse

Zusammensetzung

| | |
|---|---|
| Epoxidharz 1: | 100 g |
| Epoxidharz 4: | 10,3 g |
| Dithiol 1: | 29,6 g |
| Amin 3: | 7,9 g |

Betonprismen 4 x 4 x 16 cm werden mit einer 2 mm breiten Diamantsäge quer durch die Mitte geschnitten. Die beiden Teile der Betonprismen werden in eine dünne Latexhülle oder Kunststoffolie gewickelt und in einer PVC-Form so befestigt, dass sich eine Spaltbreite von 1,5 mm oder 15 mm bildet. Bei Anwendung als Injektionssystem wird die Epoxidharzmischung, welche eine Viskosität von 300 bis 2000 mPa·s hat, mit einer Kanüle in die 1,5 mm breite Spalte injiziert. Für die Anwendung als Dichtungsmasse wird die frische Epoxidharzmischung mit 3 Gew.% Aerosil, bezogen auf das Gesamtgewicht, thixotropiert und anschliessend in die 15 mm breite Spalte appliziert.

Zugversuch mit der Maschine der Fa. Zwick, Typ 1484 ; Vorkraft 0,1 N/mm$^2$; Prüfgeschwindigkeit 10 mm/min.

Zwischen den Spannbacken und den Betonprismen werden 1 mm dicke Hartgummistücke gelegt, damit die Betonprismen nicht durch die Druckkraft der Spannbacken zerstört werden.

a) Nach 3 Wochen Lagerung bei Raumtemperatur: (Tg der Masse = 21°C) Zugfestigkeit

- bei Spaltbreite 1,5 mm: 4,8 N/mm$^2$ (Betonbruch)
- bei Spaltbreite 15 mm: 4,2 N/mm$^2$ (zum Teil Betonbruch)

b) Nach 4 Wochen Lagerung bei 5°C (die Zusammensetzung enthält noch zusätzlich 1 Gew.%, bezogen auf das Gesamtgewicht, γ-Glycidyloxypropyltrimethoxysilan als Haftvermittler): (Tg der Masse = 15°C) Zugfestigkeit

- bei Spaltbreite 1,5 mm: 5,4 N/mm$^2$ (Betonbruch)
- bei Spaltbreite 15 mm: 4,8 N/mm$^2$ (Betonbruch)

Beispiel 28: Prüfung der Chemikalienbeständigkeit

| Zusammensetzung I | | Eigenschaften nach 10 Tagen bei Raumtemperatur | |
|---|---|---|---|
| Epoxidharz 1: | 100 g | Reissdehnung (%) | 183 |
| Dithiol 1: | 37,2 g | Reissfestigkeit (N/mm$^2$) | 3,3 |
| Amin 13*: | 4 g | Zugfestigkeit (N/mm$^2$) | 3,3 |
| Benzylalkohol: | 7,5 g | Shore D Härte | 14 |
| | | Tg (°C) | 14 |

* α,α'-Diamino-m-xylol

Zusammensetzung II:

Entspricht der Zusammensetzung gemäss Beispiel 7.

Mit den Zusammensetzungen I und II werden sandgestrahlte Stahlbleche beschichtet (Schichtdicke ca. 200 µm) und für die in der Tabelle angegebene Zeit im jeweiligen Medium gelagert. Die Beurteilung der Beschichtung ist wie folgt:

+ = beständig (keine Aenderung feststellbar)
A = angegriffen (Blasenbildung feststellbar)
Z = zerstört (Beschichtung ist so stark angegriffen, dass sie nicht mehr haftet).

| Zusammensetzung | I | | | | | | II | | | | |
|---|---|---|---|---|---|---|---|---|---|---|---|
| Testdauer in Wochen bei RT | 1/2 | 1 | 2 | 4 | 8 | 12 | 1/2 | 1 | 2 | 4 | 8 |
| Wasser, deionisiert | + | + | + | + | + | + | + | + | + | + | + |
| Salzsäure 20 % | + | + | + | + | + | + | + | + | + | + | + |
| 36 % | Z | | | | | | Z | | | | |
| Schwefelsäure 50 % | + | + | + | + | + | A | + | + | + | A | Z |
| Ammoniak | + | A | A | A | A | A | + | + | + | + | A |
| Xylol | + | + | A | A | Z | Z | + | + | + | + | + |
| Ethanol 95 % | + | A | A | A | Z | Z | + | + | + | + | A |
| 50 % | + | + | A | A | A | A | + | + | + | + | A |
| Essigsäure 10 % | + | + | + | + | + | + | + | A | A | A | A |
| 5 % | + | + | + | + | + | + | + | A | A | A | A |

Beispiele 29-31: Epoxidharz-Stoffgemische enthaltend Polytetrahydrofurandithiole A oder B, oder das Polyethylenglykoldithiol D

Die Zusammensetzung der in den Beispielen verwendeten Stoffgemische sowie die Eigenschaften der gehärteten Produkte sind aus der Tabelle ersichtlich. Die Härtung erfolgt jeweils während einer Woche bei 80°C.

| Beispiel | 29 | 30 | 31 |
|---|---|---|---|
| Epoxidharz 1 (g) | 100 | 100 | 100 |
| Dithiol 3 (g) | 25,1 | - | - |
| Dithiol 4 (g) | - | 13,7 | - |
| Dithiol 2 (g) | | | 38,3 |
| Amin 3 (vgl. Tabelle 3) (g) | - | - | 14,8 |
| Amin 2 (vgl. Tabelle 2) (g) | 54,4 | 57,9 | - |
| Reissdehnung % | 74 | 65 | 57 |
| Reissfestigkeit (N/mm$^2$) | 11,8 | 23,5 | 20,7 |
| Zugfestigkeit (N/mm$^2$) | 11,8 | 33,4 | 21,3 |
| Shore D Härte | 35 | 68 | 70 |
| Tg (°C) | 18 | 38 | 33 |

## Patentansprüche

### Patentansprüche für folgende Vertragsstaaten : AT, CH, DE, FR, GB, IT, LI

**1.** Härtbares Stoffgemisch enthaltend

(a) ein Epoxidharz,
(b) ein Dithiol der Formel I oder II

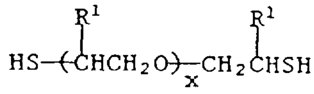

(I)

$$HS\text{-}(CH_2CH_2CH_2CH_2O)_y\text{-}CH_2CH_2CH_2CH_2SH \qquad (II),$$

worin $R^1$ unabhängig voneinander Wasserstoff oder Methyl, x eine ganze Zahl von 2 bis 50 und y eine ganze Zahl von 1 bis 30 bedeuten, und
(c) ein Polyamin mit mindestens zwei primären Aminogruppen, wobei Polyene mit durchschnittlich mindestens zwei ethylenischen Doppelbindungen in β-Stellung zu einem Sauerstoff-, Stickstoff- oder Schwefelatom ausgeschlossen sind.

2. Stoffgemisch nach Anspruch 1, worin das Epoxidharz ein Polyglycidylether eines mehrwertigen Phenols, insbesondere ein Diglycidylether von Bisphenol A ist.

3. Stoffgemisch nach Anspruch 1, worin das mittlere Molekulargewicht $\overline{M}_n$ der Dithiole der Formel I oder II kleiner als 2000, vorzugsweise kleiner als 1000 ist.

4. Stoffgemisch nach Anspruch 1, worin x in Formel I eine ganze Zahl von 2 bis 20, insbesondere von 2 bis 12 und y in Formel II eine ganze Zahl von 1 bis 12, insbesondere von 2 bis 8 ist.

5. Stoffgemisch nach Anspruch 1, worin das Dithiol eine Verbindung der Formel I ist, worin $R^1$ Wasserstoff und x 7-8 und insbesondere 2 bedeuten.

6. Stoffgemisch nach Anspruch 1, worin das Polyamin (c) ein aliphatisches oder ein cycloaliphatisches Polyamin ist.

7. Stoffgemisch nach Anspruch 1, worin die Menge des Dithiols (b) 5 - 30, vorzugsweise 10 - 25 Gew.%, bezogen auf die Gesamtmenge der Komponenten (a), (b) und (c), beträgt.

8. Stoffgemisch nach Anspruch 1, worin die Menge des Polyamins (c) 3 - 35, vorzugsweise 5 - 20 Gew.%, bezogen auf die Gesamtmenge der Komponenten (a), (b) und (c), beträgt.

9. Stoffgemisch nach Anspruch 1, worin der Anteil der an die Thiolgruppen des Dithiols (b) gebundenen Wasserstoffatome 15 - 85, vorzugsweise 20 - 80, besonders bevorzugt 25 - 75 %, bezogen auf die Gesamtzahl der an die Thiolgruppen des Dithols (b) und der an die Aminogruppen des Polyamins (c) gebundenen aktiven Wasserstoffatome, beträgt.

10. Stoffgemisch nach Anspruch 1, welches zusätzlich zu den Komponenten (a), (b) und (c) noch (d) einen Weichmacher enthält.

11. Die durch Härtung des Stoffgemisches nach Anspruch 1 erhältlichen vernetzten Produkte.

**Patentansprüche für folgenden Vertragsstaat : ES**

1. Verfahren zur Herstellung von vernetzten Produkten durch Härtung des härtbaren Stoffgemisches enthaltend

(a) ein Epoxidharz,
(b) ein Dithiol der Formel I oder II

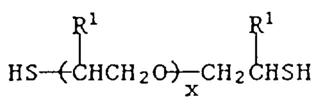 (I)

$$HS\text{-}(CH_2CH_2CH_2CH_2O)_y\text{-}CH_2CH_2CH_2CH_2SH \quad (II)$$

worin $R^1$ unabhängig voneinander Wasserstoff oder Methyl, x eine ganze Zahl von 2 bis 50 und y eine ganze Zahl von 1 bis 30 bedeuten, und
(c) ein Polyamin mit mindestens zwei primären Aminogruppen, wobei Polyene mit durchschnittlich mindestens zwei ethylenischen Doppelbindungen in β-Stellung zu einem Sauerstoff-, Stickstoff- oder Schwefelatom ausgeschlossen sind.

2. Verfahren nach Anspruch 1, worin das Epoxidharz ein Polyglycidylether eines mehrwertigen Phenols, insbesondere ein Diglycidylether von Bisphenol A ist.

3. Verfahren nach Anspruch 1, worin das mittlere Molekulargewicht $\overline{M}_n$ der Dithiole der Formel I oder II kleiner als 2000, vorzugsweise kleiner als 1000 ist.

4. Verfahren nach Anspruch 1, worin x in Formel I eine ganze Zahl von 2 bis 20, insbesondere von 2 bis 12 und y in Formel II eine ganze Zahl von 1 bis 12, insbesondere von 2 bis 8 ist.

**5.** Verfahren nach Anspruch 1, worin das Dithiol eine Verbindung der Formel I ist, worin $R^1$ Wasserstoff und x 7-8 und insbesondere 2 bedeuten.

**6.** Verfahren nach Anspruch 1, worin das Polyamin (c) ein aliphatisches oder ein cycloaliphatisches Polyamin ist.

**7.** Verfahren nach Anspruch 1, worin die Menge des Dithiols (b) 5 - 30, vorzugsweise 10-25 Gew.%, bezogen auf die Gesamtmenge der Komponenten (a), (b) und (c), beträgt.

**8.** Verfahren nach Anspruch 1, worin die Menge des Polyamins (c) 3 - 35, vorzugsweise 5 - 20 Gew.%, bezogen auf die Gesamtmenge der Komponenten (a), (b) und (c), beträgt.

**9.** Verfahren nach Anspruch 1, worin der Anteil der an die Thiolgruppen des Dithiols (b) gebundenen Wasserstoffatome 15 - 85, vorzugsweise 20 - 80, besonders bevorzugt 25 - 75 %, bezogen auf die Gesamtzahl der an die Thiolgruppen des Dithols (b) und der an die Aminogruppen des Polyamins (c) gebundenen aktiven Wasserstoffatome, beträgt.

**10.** Verfahren nach Anspruch 1, worin das Stoffgemisch zusätzlich zu den Komponenten (a), (b) und (c) noch (d) einen Weichmacher enthält.

**11.** Härtbares Stoffgemisch enthaltend

(a) ein Epoxidharz,
(b) ein Dithiol der Formel I oder II

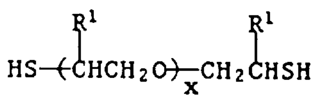

(I)

$$HS-(CH_2CH_2CH_2CH_2O)_y-CH_2CH_2CH_2CH_2SH \quad (II),$$

worin $R^1$ unabhängig voneinander Wasserstoff oder Methyl, x eine ganze Zahl von 2 bis 50 und y eine ganze Zahl von 1 bis 30 bedeuten, und
(c) ein Polyamin mit mindestens zwei primären Aminogruppen.

## Claims

**Claims for the following Contracting States : AT, CH, DE, FR, GB, IT, LI**

**1.** A hardenable mixture of materials, comprising

(a) an epoxy resin,
(b) a dithiol of the formula I or II

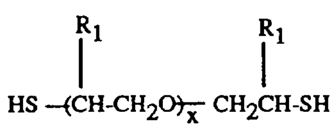

(I)

$$HS-(CH_2CH_2CH_2CH_2O)_y-CH_2CH_2CH_2CH_2-SH \quad (II),$$

in which the $R^1$s independently of one another are hydrogen or methyl, x is an integer from 2 to 50 and y is an integer from 1 to 30, and
(c) a polyamine having at least two primary amino groups, excluding polyenes having on average at least two ethylenic double bonds in β-position to an oxygen, nitrogen or sulfur atom.

**2.** A mixture of materials according to claim 1, wherein the epoxy resin is a polyglycidyl ether of a polyhydric phenol, particularly a diglycidyl ether of bisphenol A.

**3.** A mixture of materials according to claim 1, wherein the mean molecular weight $\overline{M}_n$ of the dithiols of the formula I or II is less than 2000, preferably less than 1000.

**4.** A mixture of materials according to claim 1, wherein x in formula I is an integer from 2 to 20, in particular 2 to 12, and y in formula II is an integer from 1 to 12, in particular 2 to 8.

**5.** A mixture of materials according to claim 1, wherein the dithiol is a compound of the formula I in which $R^1$ is hydrogen and x is 7 to 8, and in particular 2.

**6.** A mixture of materials according to claim 1, wherein the polyamine (c) is an aliphatic or cycloaliphatic polyamine.

**7.** A mixture of materials according to claim 1, wherein the quantity of the dithiol (b) is 5 - 30, preferably 10 to 25 % by weight, relative to the total quantity of components (a), (b) and (c).

**8.** A mixture of materials according to claim 1, wherein the quantity of polyamine (c) is 3 - 35, preferably 5 to 20 % by weight, relative to the total quantity of components (a), (b) and (c).

**9.** A mixture of materials according to claim 1, wherein the proportion of the hydrogen atoms bound to the thiol groups of the dithiol (b) is 15 - 85, preferably 20 to 80, especially preferably 25 to 75 %, relative to the total number of active hydrogen atoms bound to the thiol groups of the dithiol (b) and those bound to the amino groups of the polyamine (c).

**10.** A mixture of materials according to claim 1, which also contains (d) a plasticizer in addition to the components (a), (b) and (c).

**11.** The crosslinked products obtainable by hardening the mixture of materials according to claim 1.

**Claims for the following Contracting State : ES**

**1.** A process for preparing crosslinked products by hardening the hardenable mixture of materials comprising

(a) an epoxy resin,
(b) a dithiol of the formula I or II

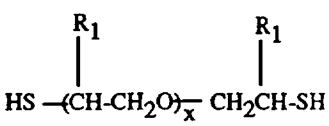

(I)

$$HS-(CH_2CH_2CH_2CH_2O)_y-CH_2CH_2CH_2CH_2\text{-}SH \qquad (II),$$

in which the $R^1$s independently of one another are hydrogen or methyl, x is an integer from 2 to 50 and y is an integer from 1 to 30, and
(c) a polyamine having at least two primary amino groups, excluding polyenes having on average at least two ethylenic double bonds in β-position to an oxygen, nitrogen or sulfur atom.

**2.** A process according to claim 1, wherein the epoxy resin is a polyglycidyl ether of a polyhydric phenol, particularly a diglycidyl ether of bisphenol A.

**3.** A process according to claim 1, wherein the mean molecular weight $\overline{M}_n$ of the dithiols of the formula I or II is less than 2000, preferably less than 1000.

**4.** A process according to claim 1, wherein x in formula I is an integer from 2 to 20, in particular 2 to 12, and y in formula II is an integer from 1 to 12, in particular 2 to 8.

**5.** A process according to claim 1, wherein the dithiol is a compound of the formula I in which $R^1$ is hydrogen and x is 7 to 8, and in particular 2.

6. A process according to claim 1, wherein the polyamine (c) is an aliphatic or cycloaliphatic polyamine.

7. A process according to claim 1, wherein the quantity of the dithiol (b) is 5 - 30, preferably 10 to 25 % by weight, relative to the total quantity of components (a), (b) and (c).

8. A process according to claim 1, wherein the quantity of polyamine (c) is 3 - 35, preferably 5 to 20 % by weight, relative to the total quantity of components (a), (b) and (c).

9. A process according to claim 1, wherein the proportion of the hydrogen atoms bound to the thiol groups of the dithiol (b) is 15 - 85, preferably 20 to 80, especially preferably 25 to 75 %, relative to the total number of active hydrogen atoms bound to the thiol groups of the dithiol (b) and those bound to the amino groups of the polyamine (c).

10. A process according to claim 1, in which the mixture of materials also contains (d) a plasticizer in addition to the components (a), (b) and (c).

11. A hardenable mixture of materials, comprising

(a) an epoxy resin,
(b) a dithiol of the formula I or II

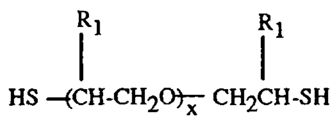
(I)

$$HS-(CH_2CH_2CH_2CH_2O)_y-CH_2CH_2CH_2CH_2\text{-}SH \qquad (II),$$

in which the $R^1$s independently of one another are hydrogen or methyl, x is an integer from 2 to 50 and y is an integer from 1 to 30, and
(c) a polyamine having at least two primary amino groups.

**Revendications**

**Revendications pour les Etats contractants suivants : AT, CH, DE, FR, GB, IT, LI**

1. Mélange de produits durcissable contenant

(a) une résine époxy,
(b) un dithiol de formule I ou II

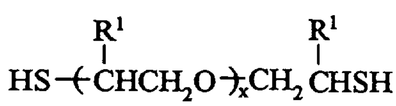
(I)

$$HS-(CH_2CH_2CH_2CH_2O)_y-CH_2CH_2CH_2CH_2SH \qquad (II),$$

dans lesquelles les $R^1$ représentent indépendamment les uns des autres des atomes d'hydrogène ou des groupes méthyle, x est un nombre entier de 2 à 50 et y est un nombre entier de 1 à 30, et
(c) une polyamine ayant au moins deux groupes amino primaire, les polyènes ayant en moyenne au moins deux doubles liaisons éthyléniques en position β par rapport à un atome d'oxygène, d'azote ou de soufre étant exclus.

2. Mélange de produits selon la revendication 1, dans lequel la résine époxy est un éther polyglycidylique d'un polyphénol, en particulier un éther diglycidylique du bisphénol A.

3. Mélange de produits selon la revendication 1, dans lequel la masse moléculaire moyenne $\overline{M}_n$ des dithiols de

formule I ou II est inférieure à 2000, de préférence inférieure à 1000.

4. Mélange de produits selon la revendication 1, dans lequel x, dans la formule I, est un nombre entier de 2 à 20, en particulier de 2 à 12, et y, dans la formule II, est un nombre entier de 1 à 12, en particulier de 2 à 8.

5. Mélange de produits selon la revendication 1, dans lequel le dithiol est un composé de formule I dans lequel $R^1$ représente un atome d'hydrogène et x est égal à 7-8 et en particulier à 2.

6. Mélange de produits selon la revendication 1, dans lequel la polyamine (c) est une polyamine aliphatique ou cycloaliphatique.

7. Mélange de produits selon la revendication 1, dans lequel la quantité de dithiol (b) est de 5 à 30, de préférence de 10 à 25 % en masse par rapport à la quantité totale des constituants (a), (b) et (c).

8. Mélange de produits selon la revendication 1, dans lequel la quantité de polyamine (c) est de 3 à 35, de préférence de 5 à 20 % en masse par rapport à la quantité totale des constituants (a), (b) et (c).

9. Mélange de produits selon la revendication 1, dans lequel la fraction d'atomes d'hydrogène liés aux groupes thiols du dithiol (b) est comprise entre 15 et 85, de préférence entre 20 et 80, de façon particulièrement préférée entre 25 et 75 % du nombre total d'atomes d'hydrogène actifs liés aux groupes thiol du dithiol (b) et aux groupes amino de la polyamine (c).

10. Mélange de produits selon la revendication 1, qui contient, en plus des constituants (a), (b) et (c), (d) un plastifiant.

11. Produits réticulés pouvant être obtenus par durcissement du mélange de produits selon la revendication 1.

**Revendications pour l'Etat contractant suivant : ES**

1. Procédé de préparation de produits réticulés par durcissement d'un mélange durcissable contenant

   (a) une résine époxy,
   (b) un dithiol de formule I ou II

$$HS\!-\!(\overset{R^1}{\overset{|}{C}}HCH_2O)_x CH_2\overset{R^1}{\overset{|}{C}}HSH \qquad (I)$$

$$HS\!-\!(CH_2CH_2CH_2CH_2O)_y\!-\!CH_2CH_2CH_2CH_2SH \qquad (II),$$

   dans lesquelles les $R^1$ représentent indépendamment les uns des autres des atomes d'hydrogène ou des groupes méthyle, x est un nombre entier de 2 à 50 et y est un nombre entier de 1 à 30, et
   (c) une polyamine ayant au moins deux groupes amino primaire, les polyènes ayant en moyenne au moins deux doubles liaisons éthyléniques en position β par rapport à un atome d'oxygène, d'azote ou de soufre étant exclus.

2. Procédé selon la revendication 1, dans lequel la résine époxy est un éther polyglycidylique d'un polyphénol, en particulier un éther diglycidylique du bisphénol A.

3. Procédé selon la revendication 1, dans lequel la masse moléculaire moyenne $\overline{M}_n$ des dithiols de formule I ou II est inférieure à 2000, de préférence inférieure à 1000.

4. Procédé selon la revendication 1, dans lequel x, dans la formule I, est un nombre entier de 2 à 20, en particulier de 2 à 12, et y, dans la formule II, est un nombre entier de 1 à 12, en particulier de 2 à 8.

5. Procédé selon la revendication 1, dans lequel le dithiol est un composé de formule I dans lequel $R^1$ représente un atome d'hydrogène et x est égal à 7-8 et en particulier à 2.

**6.** Procédé selon la revendication 1, dans lequel la polyamine (c) est une polyamine aliphatique ou cycloaliphatique.

**7.** Procédé selon la revendication 1, dans lequel la quantité de dithiol (b) est de 5 à 30, de préférence de 10 à 25 % en masse par rapport à la quantité totale des constituants (a), (b) et (c).

**8.** Procédé selon la revendication 1, dans lequel la quantité de polyamine (c) est de 3 à 35, de préférence de 5 à 20 % en masse par rapport à la quantité totale des constituants (a), (b) et (c).

**9.** Procédé selon la revendication 1, dans lequel la fraction d'atomes d'hydrogène liés aux groupes thiols du dithiol (b) est comprise entre 15 et 85, de préférence entre 20 et 80, de façon particulièrement préférée entre 25 et 75 du nombre total d'atomes d'hydrogène actifs liés aux groupes thiol du dithiol (b) et aux groupes amine de la polyamine (c).

**10.** Procédé selon la revendication 1, dans lequel le mélange contient, en plus des constituants (a), (b) et (c), (d) un plastifiant.

**11.** Mélange de produits durcissable contenant

(a) une résine époxy,
(b) un dithiol de formule I ou II

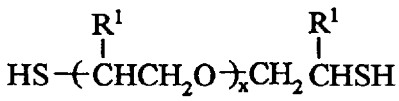

(I)

$$HS-(CH_2CH_2CH_2CH_2O)_y-CH_2CH_2CH_2CH_2SH \quad (II),$$

dans lesquelles les $R^1$ représentent indépendamment les uns des autres des atomes d'hydrogène ou des groupes méthyle, x est un nombre entier de 2 à 50 et y est un nombre entier de 1 à 30, et
(c) une polyamine ayant au moins deux groupes amino primaire.